Europäisches Patentamt

European Patent Office

Office européen des brevets

(11) Veröffentlichungsnummer: **0 527 384 A1**

# EUROPÄISCHE PATENTANMELDUNG

(21) Anmeldenummer: **92112797.3**

(22) Anmeldetag: **27.07.92**

(51) Int. Cl.5: **G02B 15/14**, G02B 17/02, G02B 13/24

(30) Priorität: **09.08.91 DE 4126421**

(43) Veröffentlichungstag der Anmeldung:
**17.02.93 Patentblatt 93/07**

(84) Benannte Vertragsstaaten:
**AT BE CH DE FR GB LI NL**

(71) Anmelder: **Agfa-Gevaert AG**

**W-5090 Leverkusen 1(DE)**

(72) Erfinder: **Jetter, Rainer**
**Görzer Strasse 133 B**
**W-8000 München 90(DE)**
Erfinder: **Scholz, Norbert, Dipl.-Ing.**
**Erlenstrasse 11**
**W-8179 Sachsenkam(DE)**

(54) **Objektiv mit variabler Brennweite und integriertem Drehprisma.**

(57) Ein Objektiv mit variabler Brennweite, bestehend aus mehreren Gruppen von Einzellipsen, von denen mindestens eine Gruppe gegenüber den anderen Gruppen bewegbar ist und zwischen zwei der Gruppen ein Drehprisma angeordnet ist, ist so ausgebildet, daß die Eintritts- und Austrittsflächen des Drehprismas senkrecht zur optischen Achse des Objektivs stehen.

Fig. 1

Die Erfindung betrifft ein Objektiv mit variabler Brennweite nach dem Oberbegriff des Anspruchs 1.

Aus der US-PS 3,360,325 ist ein gattungsgemäßes Zoomobjektiv mit einem integrierten Drehprisma bekannt. Bei dem dort verwendeten Prisma handelt es sich um ein Dove-Prisma. Das Dove-Prisma weist prinzipbedingt gegenüber der optischen Achse geneigte Ein- und Austrittsflächen auf. Die geneigten Ein- und Austrittsflächen folgen nicht der Symmetrie eines um seine Mittelachse rotationssymmetrischen Objektivs, was Abbildungsfehler verursacht, die nicht durch das Objektiv korrigiert werden können, da die im Prisma zurückgelegten Wege unterschiedlich sind. Speziell im divergenten Strahlengang macht sich dies bemerkbar, bei afokalem Strahlengang sind die Abbildungsfehler wesentlich geringer. Daher muß beim Stand der Technik im wesentlichen mit zwei Objektiven gearbeitet werden, wobei die eine Hälfte des Objektivs ein abzubildendes Objekt zuerst nach Unendlich abbildet und die zweite Hälfte des Objektivs dieses, im Unendlichen liegende Bild wieder auf eine im Endlichen liegende Ebene projiziert. Zwischen diesen beiden Hälften, im parallelen Strahlengang, befindet sich das Dove'sche Prisma. Durch das Prisma laufen von jedem Objektpunkt nur parallele Strahlen. Dennoch verbleiben nicht korrigierbare Restfehler. Aufgrund der Notwendigkeit, einen parallelen Strahlenverlauf innerhalb des Objektivs zu schaffen, wird dieses Objektiv verhältnismäßig aufwendig und groß.

Es ist Aufgabe der Erfindung, ein Objektiv mit integriertem Drehprisma zu schaffen, bei welchem für das Drehprisma kein paralleler Strahlengang notwendig ist.

Erfindungsgemäß wird diese Aufgabe gelöst durch die Merkmale des Anspruchs 1. Weitere vorteilhafte Merkmale der Erfindung sind den Unteransprüchen zu entnehmen.

Die Erfindung macht sich dabei die Erkenntnis zu eigen, daß ein Prisma, bei welchem die Eintritts- und Austrittsfläche senkrecht zur optischen Achse angeordnet ist, durch eine planparallele, senkrecht zur optischen Achse stehende Glasplatte repräsentiert werden kann. Damit folgt das erfindungsgemäß eingesetzte Prisma der Symmetrie eines um seine Mittelachse rotationssymmetrischen Objektivs. Die Fehler dieses Prismas können durch Linsen korrigiert werden. Ein solches Objektiv mit integriertem Drehprisma ist besonders geeignet für den Einsatz in einem Gerät, bei dem eine Bildbetrachtung durch eine Mattscheibe hindurch erfolgt.

Nachfolgend wird die Erfindung anhand von vier Figuren näher erläutert. Die Figuren zeigen in geschnittener Darstellung den Aufbau des Objektivs, die darin verwendeten Linsen und das Drehprisma mit eingezeichnetem Strahlengang für mittige und/oder randnahe Strahlen. Im einzelnen zeigen:

Figur 1 u.      die Stellung der einzelnen Linsengruppen
Figur 2       bei einem mittleren Vergrößerungsfaktor,
Figur 3       die Stellung der Linsen bei minimalem Vergrößerungsfaktor, und
Figur 4       die Position der Linsen bei maximalem Vergrößerungsfaktor.

Identische Elemente in den Figuren sind mit gleichen Bezugszeichen versehen.

Das Objektiv besteht im wesentlichen aus vier Linsengruppen 1, 2, 3, 4. Zwischen den Gruppen 2 und 3 befindet sich ein Drehprisma 5 nach Schmidt-Pechan. Zwischen dem Drehprisma 5 und der Linsengruppe 2 befindet sich eine Blende 6. Das Objektiv hat die Aufgabe, ein Mikrobild 7, welches durch ein Beleuchtungssystem 8 ausgeleuchtet wird, vergrößert auf einem hier nicht gezeigten Betrachtungsschirm darzustellen.

Bei der Mikroverfilmung können die Vorlagen in Quer- und Hochformat verfilmt worden sein. Um es dem Betrachter zu ermöglichen, eine mikroverfilmte Vorlage, unabhängig von ihrer Aufnahmelage auf dem Projektionsschirm, in der von ihm gewünschten Lage abzubilden, ist das Schmidt-Pechan-Prisma 5 drehbar gelagert. Mit der Drehung des Prismas 5 geht eine Drehung des auf dem Projektionsschirm dargestellten Mikrobildes 7 einher. Man kann auch jede beliebige Linsengruppen gemeinsam mit dem Prisma 5 oder auch das gesamte Objektiv verdrehen. Die Drehung des Prismas 5 kann dabei von Hand oder automatisch durch einen hier nicht gezeigten Elektromotor erfolgen.

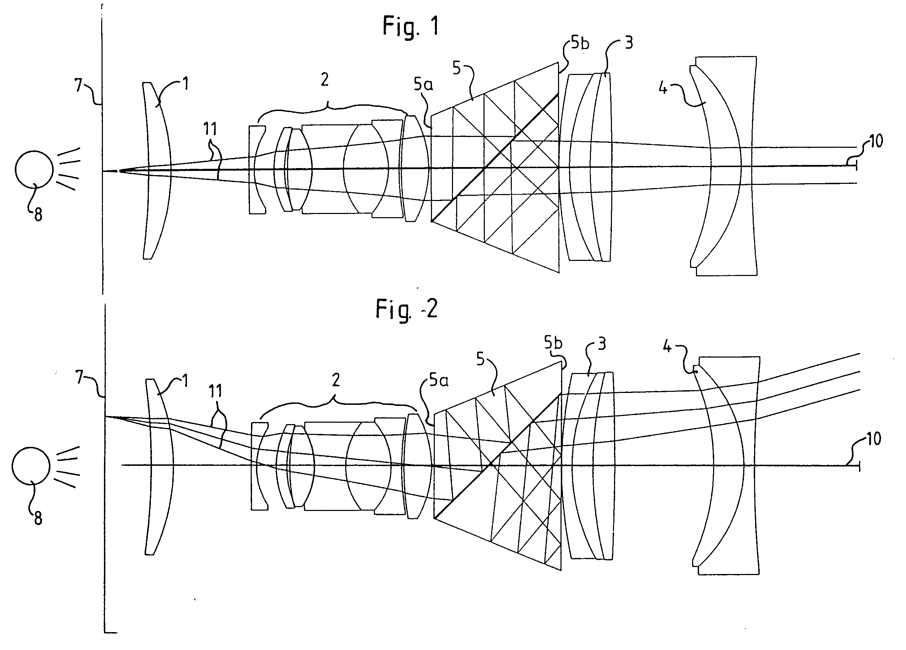

In Figur 1 ist der prinzipielle Abbildungsstrahlengang 11a für den in der Mitte liegenden Bildpunkt dargestellt. Der Abbildungsstrahlengang für randnahe Bildpunkte ist in Figur 2 dargestellt und mit 11b beziffert.

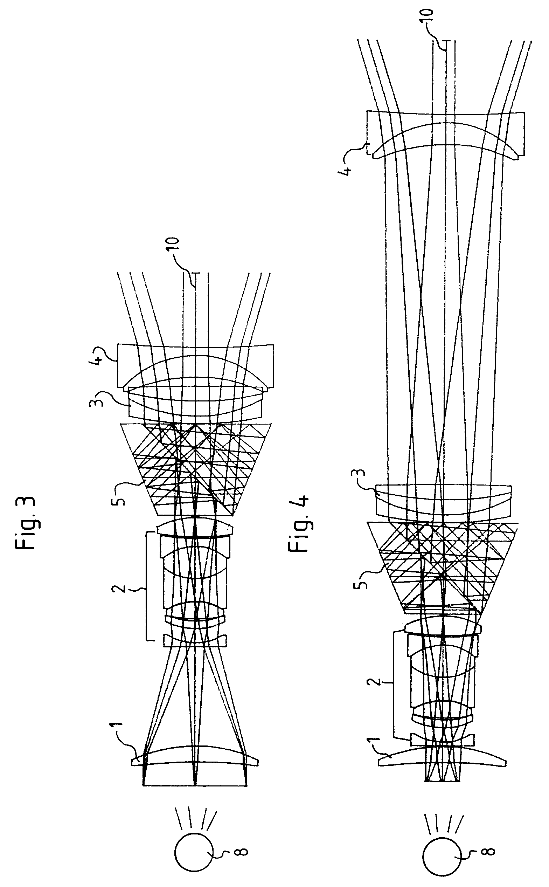

In Figur 3 ist das Objektiv in der Position dargestellt, in welcher die Vergrößerung minimal ist. In dieser Stellung befinden sich die Linsengruppen 2, 3 mit dem dazwischenliegenden Prisma 5 ganz nahe an der Linsengruppe 4 und haben einen größeren Abstand von der Linsengruppe 1.

In Figur 4 ist das Objektiv in der Position dargestellt, in welcher es die maximale Vergrößerung erzielt. In dieser Stellung befinden sich die Linsengruppen 2 und 3 mit dem dazwischenliegenden Prisma 5 nahe an der Linsengruppe 1, während ihr Abstand zur Linsengruppe 4 sehr groß ist.

Auf ihrem Weg vom Mikrobild 7 bis zur Projektionsfläche durchlaufen die Lichtstrahlen die Linsengruppe 1 mit einer positiven Brechkraft, dann die Linsengruppe 2 mit einer positiven Brechkraft, weiter durch das Schmidt-Pechan-Prisma 5, welches im wesentlichen durch eine planparallele Glasplatte dargestellt werden kann, weiter durch die Linsengruppe 3 mit positiver Brechkraft und schließlich durch die Linsengruppe 4, mit negativer Brechkraft.

Wie auch aus den Figuren 3 und 4 ersichtlich, bewegen sich die Linsengruppen 1, 2, 3, 4 zum Verstellen des Abbildungsmaßstabs relativ zueinander.

Um bei den verschiedenen Abbildungsmaßstäben die Helligkeit des Bildes auf dem Projektionsschirm konstant zu halten, muß synchron zum Verstellen des Abbildungsmaßstabs auch die Öffnung der Blende 6, welche sich zwischen der Linsengrupppe 2 und dem Schmidt-Pechan-Prisma 5 befindet, verändert werden. Die Eintrittsfläche 5a und die Austrittsfläche 5b des Prismas 5 stehen senkrecht zur optischen Achse 10.

Die Bedeutung der im weiteren Text verwendeten Indizes wird an dieser Stelle erläutert:

$fr_{max}$ = Maximale Brennweite des Referenzobjektivs
$fr_{min}$ = Minimale Brennweite des Referenzobjektivs
$fv_{max}$ = Maximale Brennweite des Vergleichsobjektivs
$fv_{min}$ = Minimale Brennweite des Vergleichsobjektivs
$fr_i$ = Brennweite der i-ten Linsengruppe im Referenzobjektiv bei 587,56 nm (WL)
$fv_i$ = Brennweite der i-ten Linsengruppe im Vergleichsobjektiv bei 587,56 nm (WL)
$\hat{f}r_i$ = normierte Brennweite der i-ten Linsengruppe im Referenzobjektiv bei 587,56 nm (WL)
$\hat{f}v_i$ = normierte Brennweite der i-ten Linsengruppe im Vergleichsobjektiv bei 587,56 nm (WL)
$\hat{f}r_{rot,i}$ = normierte Brennweite der i-ten Linsengruppe im Referenzobjektiv bei 656,27 nm (WL)
$\hat{f}v_{rot,i}$ = normierte Brennweite der i-ten Linsengruppe im Vergleichsobjektiv bei 656,27 nm (WL)
$\hat{f}r_{blau,i}$ = normierte Brennweite der i-ten Linsengruppe im Referenzobjektiv bei 486,13 nm (WL)
$\hat{f}v_{blau,i}$ = normierte Brennweite der i-ten Linsengruppe im Vergleichsobjektiv bei 486,13 nm (WL)
$\hat{q}r_i$ = normierte Farbzerstreuung der i-ten Linsengruppe im Referenzobjektiv
$\hat{q}v_i$ = normierte Farbzerstreuung der i-ten Linsengruppe im Vergleichsobjektiv
WL = Wellenlänge des Lichts.

Die hier gezeigte Ausführungsform ist nur eine der möglichen Lösungen, wesentlich für die Leistung des Gesamtobjektivs sind die aufeinander abgestimmten Brennweiten der einzelnen Linsengruppen. Das Brennweitenverhältnis der einzelnen Linsengruppen zueinander läßt sich am allgemeinsten durch normierte Brennweiten beschreiben, die nach der Formel

$$\hat{f}r_i = \frac{fr_i}{\sqrt{fr_{max} \cdot fr_{min}}}$$

berechnet werden. Die normierten Brennweiten für die Linsengruppen betragen:

$\hat{f}r_1$ = 2,6001
$\hat{f}r_2$ = 1,8119
$\hat{f}r_3$ = 4,2680
$\hat{f}r_4$ = -2,2022

Um ein Objektiv einer gewünschten Brennweite zu konstruieren, ist es ausreichend, Linsengruppen zu verwenden, deren einzelne Brennweiten sich aus der Multiplikation der normierten Brennweiten mit einem Skalar ergibt. Der Skalar hat dann für alle vier Linsengruppen 1, 2, 3, 4 gleich zu sein.

Leichte Abweichungen der verwendeten Linsengruppen von der normierten Brennweite sind solange noch tolerierbar, solange sich die daraus ergebende Abweichung für das Gesamtobjektiv unter der 3 %-Grenze befindet. Die Berechnung der Gesamtabweichung läßt sich nach folgender Formel berechnen:

$$\frac{\sum_{i=1}^{4}\left(\frac{1}{\hat{f}v_i} - \frac{1}{\hat{f}r_i}\right)^2}{\sum_{i=1}^{4}\left(\frac{1}{\hat{f}v_i}\right)^2 \cdot \sum_{i=1}^{4}\left(\frac{1}{\hat{f}r_i}\right)^2} \leq 0.03$$

Ein weiteres Qualitätsmerkmal für ein Objektiv ist die Fähigkeit, die unterschiedlichen Farbanteile eines Bildes in einem gemeinsamen Fokus und in der gleichen Größe abzubilden. Zur Beurteilung dieser Fähigkeit wird hier untersucht, inwieweit die jeweiligen Brennweiten des Gesamtobjektivs bei einem Licht der Wellenlänge 587,56 Nanometer (gelbe Natriumspektrallinie) und Licht mit der Wellenlänge von 656,27 Nanometer (rote Wasserstoffspektrallinie) sowie einem Licht mit 486,13 Nanometer (blaue Wasserstoffspektrallinie) voneinander unterschiedlich sind.

Die Farbzerstreuung der einzelnen Linsengruppen 1, 2, 3, 4 ist idealer Weise für jede der Linsengruppen gleich null. Es ist aber auch möglich, daß die einzelnen Linsengruppen eine Farbzerstreuung aufweisen, die im Zusammenwirken mit der Farbzerstreuung der jeweiligen anderen Linsengruppen des Objektivs kompensiert wird und so die Farbzerstreuung des Gesamtobjektivs gering ausfällt.

Die Farbzerstreuung wird anhand folgender Formel berechnet:

$$\hat{q}r_i = \frac{1}{\hat{f}r_{rot,i}} - \frac{1}{\hat{f}r_{blau,i}}$$

Die einzelnen Linsengruppen des hier beschriebenen Objektivs weisen folgende Farbzerstreuungen auf:

$\hat{q}r_1$ = -0,0084013
$\hat{q}r_2$ = 0,0021030
$\hat{q}r_3$ = -0,0051814
$\hat{q}r_4$ = 0,0000718

Eine noch innerhalb akzeptabler Bereiche liegende Farbzerstreuung eines ähnlichen Objektivs muß folgender Bedingung genügen:

$$\frac{\sum_{i=1}^{4}(\hat{q}v_i - \hat{q}r_i)^2}{\sum_{i=1}^{4}(\hat{q}v_i)^2 \cdot \sum_{i=1}^{4}(\hat{q}r_i)^2} \leq 0.03$$

**Patentansprüche**

1. Objektiv mit variabler Brennweite, bestehend aus mehreren Gruppen von Einzellinsen, von denen mindestens eine Gruppe gegenüber den anderen Gruppen bewegbar ist und zwischen zwei der Gruppen ein Drehprisma angeordnet ist, dadurch gekennzeichnet, daß die Eintritts- und Austrittsflächen des Drehprismas senkrecht zur optischen Achse des Objektivs stehen.

2. Objektiv nach Anspruch 1, dadurch gekennzeichnet, daß das Prisma ein Schmidt-Pechan-Prisma ist.

3. Objektiv nach Anspruch 1, dadurch gekennzeichnet, daß das Prisma ein Abbe-König-Prisma ist.

4. Objektiv nach Anspruch 1 bis 3, dadurch gekennzeichnet, daß
   - das Objektiv aus vier Gruppen (i = 1 .. 4) mit unterschiedlichen Gruppenbrennweiten $fr_i$ besteht,
   - die einzelnen Gruppen (i = 1 .. 4) folgende, auf den geometrischen Mittelwert aus minimaler ($fr_{min}$) und maximaler ($fr_{max}$) Brennweite des Objektivs bezogene, normierte Gruppenbrennweiten $\hat{f}r_i$ aufweisen, die nach der Formel:

$$\hat{f}r_i = \frac{fr_i}{\sqrt{fr_{max} \cdot fr_{min}}}$$

errechnet sind und die jeweilige Gruppenbrennweite

$\hat{f}r_1 = 2,6001$
$\hat{f}r_2 = 1,8119$
$\hat{f}r_3 = 4,2680$
$\hat{f}r_4 = -2,2022$

beträgt.

5. Objektiv nach einem der vorangegangenen Ansprüche, dadurch gekennzeichnet, daß die Werte für die normierten Gruppenbrennweiten $\hat{f}v_i$ (i = 1 .. 4) nach folgender Formel:

$$\hat{f}v_i = \frac{fv_i}{\sqrt{fv_{max} \cdot fv_{min}}}$$

berechnet sind und die Abweichung von dem Vergleichsobjektiv nach Anspruch 4 die folgende Bedingung erfüllt:

$$\frac{\sum_{i=1}^{4}\left(\frac{1}{\hat{f}v_i} - \frac{1}{\hat{f}r_i}\right)^2}{\sum_{i=1}^{4}\left(\frac{1}{\hat{f}v_i}\right)^2 \cdot \sum_{i=1}^{4}\left(\frac{1}{\hat{f}r_i}\right)^2} \leq 0.03$$

6. Objektiv nach einem der vorangegangenen Ansprüche, dadurch gekennzeichnet, daß die Farbzerstreuungen $\hat{q}r_i$ (i = 1..4) berechnet nach der Formel:

$$\hat{q}r_i = \frac{1}{\hat{f}r_{rot,i}} - \frac{1}{\hat{f}r_{blau,i}}$$

für die einzelnen Linsengruppen (1, 2, 3, 4) beträgt:

$\hat{q}r_1 = -0,0084013$
$\hat{q}r_2 = 0,0021030$
$\hat{q}r_3 = -0,0051814$
$\hat{q}r_4 = 0,0000718$

7.  Objektiv nach einem der vorangegangenen Ansprüche, dadurch gekennzeichnet, daß die Werte für die Farbzerstreuungen $\hat{q}v_i$ (i = 1 .. 4) nach der folgenden Formel berechnet sind :

$$\hat{q}v_i = \frac{1}{\hat{f}v_{rot,i}} - \frac{1}{\hat{f}v_{blau,i}}$$

und die Abweichung von dem Vergleichsobjektiv nach Anspruch 6 die folgende Bedingung erfüllt:

$$\frac{\sum_{i=1}^{4}(\hat{q}v_i - \hat{q}r_i)^2}{\sum_{i=1}^{4}(\hat{q}v_i)^2 \cdot \sum_{i=1}^{4}(\hat{q}r_i)^2} \leq 0.03$$

Fig. 1

Fig. 2

Fig. 3

Fig. 4

EP 0 527 384 A1

Europäisches
Patentamt

# EUROPÄISCHER RECHERCHENBERICHT

Nummer der Anmeldung

EP 92 11 2797

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 286 592 (H.WAGNER) <br> * Ansprüche; Abbildungen * <br> --- | 1 | G02B15/14 <br> G02B17/02 <br> G02B13/24 |
| A | US-A-4 746 204 (G.H.PAREIGAT) <br> * Ansprüche; Abbildungen * <br> --- | 1 | |
| Y,D <br> A | US-A-3 360 325 (D.E.GUSTAFSON) <br> * Ansprüche; Abbildungen * <br> --- | 1 <br> 2,3 | |
| Y,P <br> A | GB-A-2 244 817 (GEC FERRANTI) <br> * Ansprüche; Abbildungen * <br> --- | 1 <br> 2,3 | |
| Y,D | US-A-4 750 820 (G.H.PAREIGAT) <br> * Ansprüche; Abbildungen * <br> --- | 1 | |
| Y | WO-A-8 707 391 (EASTMAN KODAK) <br> --- | 1 | |
| A | DE-A-2 728 729 (C.ZEISS) <br> * Ansprüche; Abbildungen * <br> --- | 1 | |
| A | DE-A-2 436 230 (FUJI) <br> * Ansprüche; Abbildungen * <br> --- | 1 | RECHERCHIERTE SACHGEBIETE (Int. Cl.5) |
| A | US-A-4 740 067 (TOSHIHIKO UEDA) <br> * Ansprüche; Abbildungen * <br> --- | 1 | G02B |
| A | US-A-4 743 102 (G.H.PAREIGAT) <br> * Ansprüche; Abbildungen * <br> --- | 1 | |
| A | US-A-4 733 951 (G.H.PAREIGAT) <br> * Ansprüche; Abbildungen * <br> --- | 1 | |
| A | PATENT ABSTRACTS OF JAPAN <br> no. 13355 9. August 1989 <br> & JP-A-11 13 736 ( CANON ) 2. Mai 1989 <br> * Zusammenfassung * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 03 NOVEMBER 1992 | PFAHLER R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument